# EUROPÄISCHE PATENTSCHRIFT

(11) **EP 1 498 020 B1**
(45) Veröffentlichungstag und Bekanntmachung des Hinweises auf die Patenterteilung: **02.10.2013**
(21) Anmeldenummer: 04016396.6
(22) Anmeldetag: 13.07.2004
(51) Int. Cl.: A01D 78/10

(54) **Heuwerbungsmaschine**
Hay making machine
Machine de fenaison

(30) Priorität: 16.07.2003 DE 10332437
(43) Veröffentlichungstag der Anmeldung: 19.01.2005
(73) Patentinhaber: Maschinenfabrik Bernard Krone GmbH, 48480 Spelle (DE)
(72) Erfinder: Krone, Bernard, Dr.-Ing. E.h., 48480 Spell (DE); Leifeling, Karl, Dipl.-Ing., 48477 Hörstel-Bevergern (DE); Spree, Christian, Dipl.-Ing., 49584 Fürstenau (DE)

(56) Entgegenhaltungen:
- EP-A- 0 464 387
- EP-A- 0 541 516
- EP-A- 0 753 247
- DE-U- 29 507 128
- DE-U- 29 806 043
- US-A- 3 638 977

## Beschreibung

Die Erfindung betrifft eine Heuwerbungsmaschine, insbesondere zum Zetten und Wenden, mit zumindest an einem Maschinenbalken angeordneten und über Stützräder auf dem Boden abgestützten Arbeitskreiseln, wobei der um im wesentlichen vertikale Schwenkachsen in eine Transportstellung parallel zur Fahrtrichtung schwenkbare Seitenteile aufweisende Maschinenbalken durch horizontale Schwenkachsen in Einzeltragbalken unterteilt ist.

Bekannt ist aus der DE 298 06 043 U1 eine Landmaschine, bei der mit Lauf- und Stützrädern versehene Seitenteile zur Anpassung der Maschinenbreite an die für den Straßentransport zulässige Transportbreite nach hinten eingeschwenkt werden können. Die dabei erforderliche Umstellung der Lauf- und Stützräder der Arbeitskreisel von einer Betriebstellung in eine andere erfordert eine Verschwenkung der Lauf- und Stützräder um einen Winkel von 90°, wobei zumindest eines der Lauf- und Stützräder an jedem schwenkbaren Seitenteil des Maschinenbalkens mit einer Lenkvorrichtung versehen ist, welche vom Fahrer oder Bediener der Landmaschine betätigt werden kann. Zum Transport der vorstehend beschriebenen Landmaschine muss diese in eine Transportstellung verbracht werden, bei der die schwenkbaren Seitenteile des Maschinenbalkens sich in einer in Fahrtrichtung ausgerichteten Stellung befinden. Dabei ist es erforderlich, dass die mit einer Lenkvorrichtung versehenen Lauf- und Stützräder aktiv um 90° verschwenkt werden müssen und dann ebenfalls in Fahrtrichtung ausgerichtet sind. Die übrigen Lauf- und Stützräder sind nachlaufgelenkt und richten sich dementsprechend zu Beginn der Transportfahrt selbsttätig aus. Während der Transportfahrt, insbesondere bei hohen Transportgeschwindigkeiten und auf nicht ganz ebenen Feldwegen zeigt sich jedoch, dass die nachlaufgelenkten Lauf- und Stützräder kurzzeitig von der Fahrbahn abheben und dadurch die Fahreigenschaften der Landmaschine beeinträchtigen.

In der EP 0 541 516 A2 wird eine Heuwerbungsmaschine offenbart, welche an einem quer zur Fahrtrichtung ausgerichteten Rahmen mit mindestens sechs Rechkörpern bestückt ist und deren Rechkörper um horizontale und in Fahrtrichtung weisende Achsen des Rahmens schwenkbar aus der quergerichteten Arbeitsstellung in eine Transportstellung überführbar ist, in der sich die jeweiligen Rahmenabschnitte mit den Rechkörpern in einer gefalteten Anordnung oberhalb der beiden mittleren Rechkörper befinden.

Eine weitere EP 0 753 247 A1 zeigt und beschreibt eine landwirtschaftliche Arbeitsmaschine in der Art eines Vielkreisel-Heuwenders, der ebenfalls eine Vielzahl von als Zinkenkreisel ausgebildete Arbeitswerkzeuge umfasst, wobei die Zinkenkreisel in der Arbeitsstellung an einem quergerichteten Mittelrahmen sowie an diesen sich anschließenden schwenkbeweglich miteinander verbundenen Tragarmen angeordnet sind. In der Transportstellung können die sich beidseitig an den Mittelrahmen anschließenden Tragarme mit den daran angebrachten Zinkenkreisel in eine nach vorn verschwenkbare Stellung verbracht werden, wobei die endgültige Transportstellung erst nach einem Aushubvorgang der gesamten Arbeitsmaschine erreicht ist, der dadurch vollzogen wird, dass die gesamte Arbeitsmaschine gegenüber den sich unterhalb der am Mittelrahmen angebrachten Zinkenkreisel befindlichen Tast- und Transporträdern durch dort angeordnete Hydraulikzylinder ausgehoben wird. Eine Fortbewegung der Heuwerbungsmaschine auf den unterhalb der Zinkenkreisel befindlichen Stützrädern während der Transportfahrt ist also überhaupt nicht vorgesehen.

Der Erfindung liegt die Aufgabe zugrunde, die Nachteile des Standes der Technik zu überwinden und eine Heuwerbungsmaschine bereit zu stellen, welche selbst bei einer großen Länge der in die Transportstellung überführten Seitenteile des Maschinenbalkens über gute Fahreigenschaften verfügt.

Zur Lösung dieser Aufgabe zeichnet sich die Heuwerbungsmaschine der eingangs genannten Art dadurch aus, dass durch eine besonders vorteilhafte Verlagerung des Maschinengewichts auf die sich auf dem Boden abstützenden Stützräder während der Transportfahrt, diese durch den erhöhten Bodendruck wesentlich ruhigere Laufeigenschaften aufweisen. Die in Arbeitsfahrt der Maschine angestrebte gleichmäßige Gewichtsverteilung auf alle Stützräder der Maschine wird damit durch die Erfindung wie sie in Anspruch 1 gekennzeichnet ist aufgehoben.

Um diesen erfindungsgemäßen Vorteil zu erzielen, werden dazu für die Transportfahrt mindestens ein oder mehrere Stützräder pro Maschinenseitenteil aus einer sich auf dem Boden abstützenden Gebrauchsstellung in eine vom Boden abgehobene Nichtgebrauchsstellung überführt. Somit werden diese Stützräder entlastet und die weiterhin sich auf dem Boden abstützenden Stützräder zusätzlich belastet, was ein Abheben der Stützräder vom Boden während der Transportfahrt auch bei unebenem Untergrund verhindert und das Fahrverhalten der Maschine entscheidend verbessert.

Bei der Auswahl der in Gebrauchsstellung verbleibenden Stützräder während der Transportfahrt ist es vorteilhaft, wenn pro Seitenteil mindestens ein gelenktes Stützrad sich auf dem Boden abstützend verbleibt.

Je nach Ausführungsform ist so ein Transportfahrwerk unterschiedlichster Bauart ausführbar.

Eine Ausführungsform in der Art eines Tandemanhängers mit besonders guter Wendigkeit und guten Nachlaufeigenschaften ist durch den Verbleib von zwei gelenkten Stützrädern pro Seitenteil in der Gebrauchsstellung während der Transportfahrt im mittleren Bereich der Seitenteile realisierbar.

Eine weitere Ausführungsform mit besonders guten Nachlaufeigenschaften durch den Verbleib von mindestens einem gelenkten Stützrad in der Gebrauchsstellung während der Transportfahrt im hinteren Bereich je Seitenteil ist ebenso denkbar.

Bei allen Ausführungsformen ist zusätzlich noch zur Unterstützung der Kurvenfahrt eine aktive Lenkung der gelenkten Stützräder möglich.

Ein zusätzlicher besonderer Vorteil der erfindungsgemäßen Aushebung der Stützräder in eine Nichtgebrauchsstellung besteht darin, dass die Stützräder dabei einen annähernd vertikalen Aushubweg beschreiben und dieser Weg so gering ist, dass die Bauhöhe der Maschine dadurch nur unwesentlich verändert wird.

Das bedeutet auch für die Transportfahrt eine sehr gute Übersicht über die Maschine und eine freie Sicht nach hinten.

Die Betätigung der Überführung der Stützräder von der Gebrauchsstellung in eine vom Boden abgehobene Nichtgebrauchsstellung und zurück ist in einer Ausführungsform gekoppelt mit der Verschwenkung der gelenkten Stützräder von der Arbeits- in die Transportstellung und zurück mit den gleichen Stellantrieben denkbar.

Es ist aber auch eine Ausführungsform mit mindestens einem separaten Stellglied denkbar bei der eventuell sogar je nach Einsatzbedingungen wahlweise verschiedene Fahrwerksvarianten gewählt werden können.

Weitere Einzelheiten und Vorteile der Erfindung ergeben sich aus den Unteransprüchen 2-10 und der nachfolgenden Beschreibung und den Zeichnungen einer Ausführungsform einer erfindungsgemäßen Heuwerbungsmaschine. In den Zeichnungen zeigen:
**Fig. 1** zeigt eine Ausführungsform einer erfindungsgemäßen Heuwerbungsmaschine in teilweise abgebrochener Darstellung in Arbeitsstellung von hinten in Fahrtrichtung gesehen,
**Fig. 2** zeigt die Maschine nach Fig. 1 in Transportstellung von der Seite,

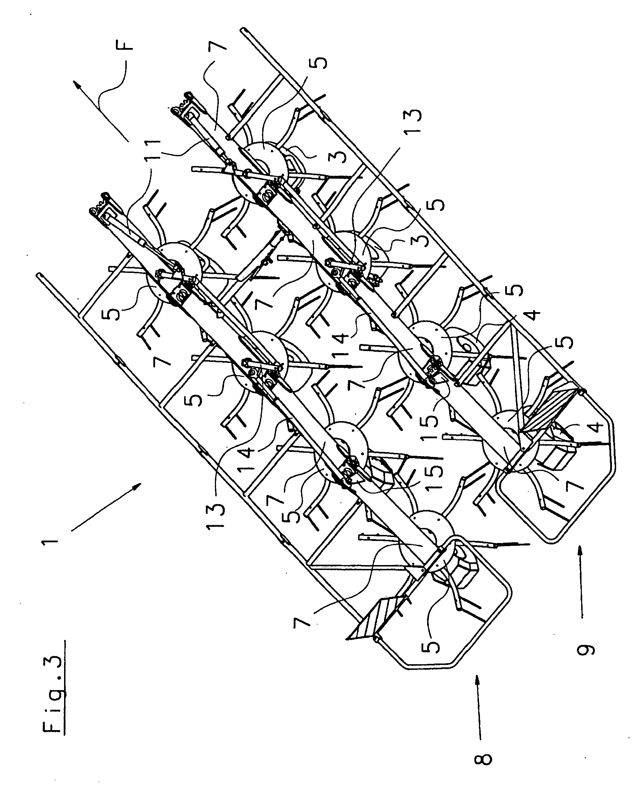

**Fig. 3** zeigt eine perspektivische Ansicht der in Transportstellung verschwenkten Seitenteile der Heuwerbungsmaschine nach Fig. 1.

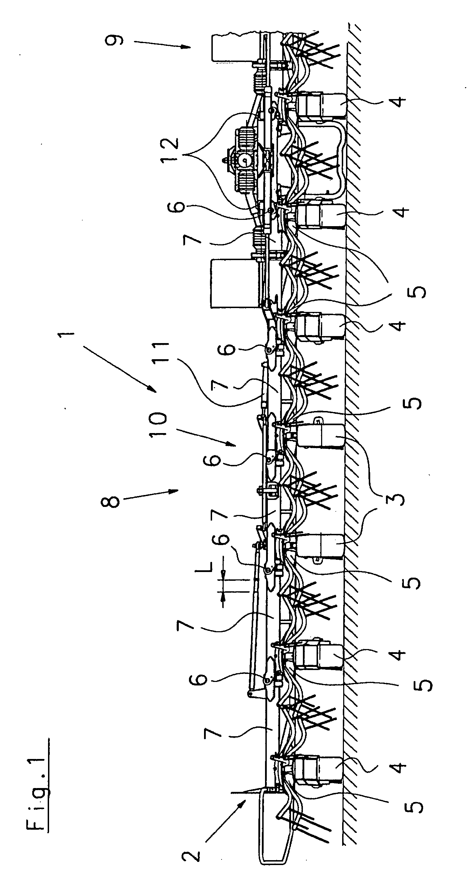

Fig. 1 zeigt eine Ausführungsform einer erfindungsgemäßen Heuwerbungsmaschine 1 von hinten in Fahrtrichtung F gesehen. Für eine genauere Darstellung wurde die spiegelbildliche Heuwerbungsmaschine 1 rechts abgebrochen dargestellt.

Der Maschinenbalken 2, an dem die über Stützräder 3,4 abgestützten Arbeitskreisel 5 angebracht sind, ist durch horizontale Schwenkachsen 6 in Einzeltragbalken 7 unterteilt. Die linken und rechten Seitenteile 8 und 9 weisen bei dieser Ausführungsform der Erfindung jeweils sechs Arbeitskreisel 5 auf. Auf diese Art und Weise wird eine Arbeitsbreite von rund 13 m realisiert. Den Arbeitskreiseln 5 sind pro Seitenteil 8, 9 vier ungelenkte, nachlaufende Stützräder 4, sowie jeweils zwei gelenkte, weitere Stützräder 3 zugeordnet. Die gelenkten Stützräder 3 sind bei einer Heuwerbungsmaschine mit einer solch großen Arbeitsbreite, die sich dann auch in einer großen Längserstreckung des Fahrzeuges in Transportstellung niederschlägt, von großem Vorteil für die Fahrstabilität der gesamten Maschine. Zur Ausführung einer Lenkbewegung der gelenkten Stützräder 3, sind diese je Seitenteil 8, 9 über eine Lenkeinrichtung 10 mit einem Lenkzylinder 11 verbunden.

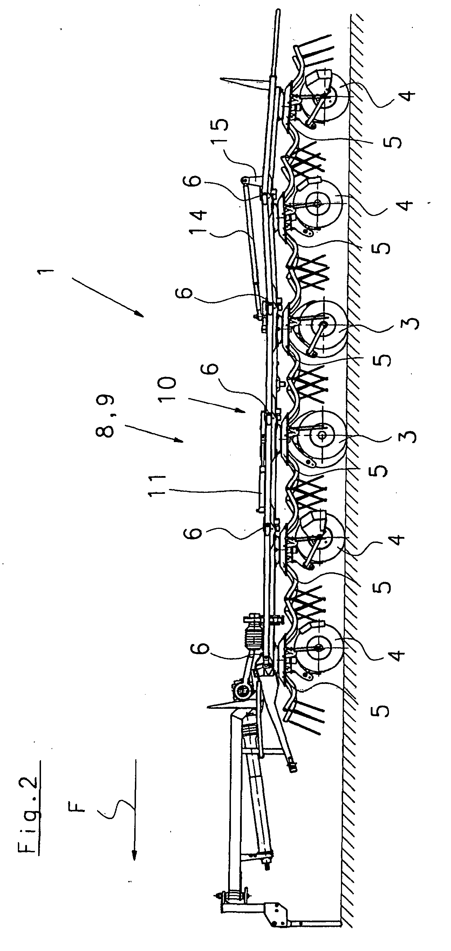

Zur Verbringung der Heuwerbungsmaschine 1 in eine die Breite der Maschine wesentlich verringernde Transportstellung Fig. 2 u. 3, werden die Seitenteile 8, 9 um im wesentlichen vertikale Schwenkachsen 12 in eine in etwa parallel zur Fahrtrichtung F ausgerichtete Transportstellung verschwenkt.

Nach dem Verschwenken der Seitenteile 8, 9 in die Transportstellung werden die gelenkten Stützräder 3 durch die Lenkeinrichtung 10 ebenfalls in eine in Fahrtrichtung F ausgerichtete Transportstellung geschwenkt, wie in Fig. 2 u. 3 ersichtlich.

Gleichzeitig mit der Verschwenkung der gelenkten Stützräder 3 in die Transportstellung wird eine an einen Schwenkhebel 13 gekoppelte und von diesem betätigte teleskopierbare Druckstange 14 so weit in Richtung entgegen der Fahrtrichtung F betätigt, dass nach Überwinden eines Leerwegs L für die Arbeitsstellung ein Moment auf den letzten Einzeltragbalken 7 ausgeübt wird. Dieses Moment wird durch die Kraft, die die Druckstange 14 auf den Anlenkbock 15 durch Kopplung mit diesem ausübt, auf den letzten Einzeltragbalken 7 übertragen und bewirkt ein Einknicken der beiden letzten Einzeltragbalken 7 um die sie verbindende Schwenkachse 6 zueinander in der Art, dass sich die horizontale Schwenkachse 6 vertikal nach oben bewegt.

Mit dieser vertikalen Bewegung der hoizontalen Schwenkachse 6 wird gleichzeitig das im Bereich dieser horizontalen Schwenkachse 6 befindliche Stützrad 4 mit dem dazugehörigen Arbeitskreisel 5 ebenfalls annähernd vertikal in eine vom Boden abgehobene Nichtgebrauchsstellung überführt. Durch diese Entlastung des jeweils vorletzten Stützrades 4 je Seitenteil 8, 9 wird das jeweils letzte Stützrad 4 entsprechend stärker belastet. Diese zusätzliche Belastung der Stützräder 4, besonders am Ende der Seitenteile 8, 9 bewirkt eine wesentliche Verbesserung des Bodenkontaktes und damit der Fahrstabilität der Heuwerbungsmaschine 1 bei der Transportfahrt.

Diese beispielhaft beschriebene Ausführungsform einer erfindungsgemäßen Heuwerbungsmaschine 1 ist auch in diversen anderen Ausführungsvarianten der Betätigung und auch der eventuell sogar je nach Fahrsituation automatisch gesteuerten Aushebung von einem oder mehreren Stützrädern 3, 4 in eine vom Boden abgehobene Nichtgebrauchsstellung denkbar.

## Patentansprüche

1. Heuwerbungsmaschine, insbesondere zum Zetten und Wenden, mit an einem Maschinenbalken (2) angeordneten und über Stützräder (3, 4) auf dem Boden abgestützten Arbeitskreiseln (5), wobei der um im wesentlichen vertikale Schwenkachsen (12) in eine Transportstellung parallel zur Fahrtrichtung schwenkbare Seitenteile (8, 9) aufweisende Maschinenbalken (2) durch horizontale Schwenkachsen (6) in Einzeltragbalken (7) mit zumindest einem daran angebrachten Arbeitskreisel (5) unterteilt ist und alle Arbeitskreisel (5) auf die Seitenteile (8, 9) verteilt sind, wobei jedes Seitenteil (8, 9) mindestens ein gelenktes Stützrad (3) aufweist, **dadurch gekennzeichnet, dass** zumindest eines der einem Seitenteil (8, 9) zugeordneten Stützräder (3, 4) mit oder ohne den dazugehörigen Arbeitskreisel (5) aus einer sich auf dem Boden abstützenden Gebrauchsstellung in eine vom Boden abgehobene Nichtgebrauchsstellung und zurück überführbar ist, wobei diese Stützräder einen annähernd vertikalen Hubweg beschreiben, der so gering ist, dass die Bauhöhe der Heuwerbungsmaschine nur unwesentlich verändert wird.

2. Heuwerbungsmaschine nach Anspruch 1, **dadurch gekennzeichnet, dass** jedes Seitenteil (8, 9) mit zwei gelenkten Stützrädern (3) versehen ist und vor und hinter den gelenkten Stützrädern (3) jeweils ein Stützrad (4) angeordnet ist, welches mit dem dazugehörigen Arbeitskreisel (5) aus einer sich auf dem Boden abstützenden Gebrauchsstellung in eine vom Boden abgehobene Nichtgebrauchsstellung und zurück überführbar ist.

3. Heuwerbungsmaschine nach Anspruch 1 oder 2, **dadurch gekennzeichnet, dass** die aus einer sich auf dem Boden abstützenden Gebrauchsstellung in eine vom Boden abgehobene Nichtgebrauchsstellung und zurück überführbaren Stützräder (4) als nachlaufgelenkte Stützräder ausgebildet sind.

4. Heuwerbungsmaschine nach einem der Ansprüche 1 bis 3, **dadurch gekennzeichnet, dass** jedes Seitenteil (8, 9) mit mehr als zwei gelenkten Stützrädern (3) versehen ist und bis auf zwei im mittleren Bereich der Seitenteile (8, 9) befindliche gelenkte Stützräder (3) alle weiteren Stützräder aus einer sich auf dem Boden abstützenden Gebrauchsstellung in eine vom Boden abgehobene Nichtgebrauchsstellung und zurück überführbar ausgeführt sind.

5. Heuwerbungsmaschine nach Anspruch 1, **dadurch gekennzeichnet, dass** die in etwa vertikale Hubbewegung der Stützräder (3, 4) bei der Überführung der Stützräder (3, 4) aus einer sich auf dem Boden abstützenden Gebrauchsstellung in eine vom Boden abgehobene Nichtgebrauchsstellung und zurück mindestens 30 mm beträgt.

6. Heuwerbungsmaschine nach einem der Ansprüche 1 bis 5, **dadurch gekennzeichnet, dass** die Überführung der Stützräder (3, 4) aus einer sich auf dem Boden abstützenden Gebrauchsstellung in eine vom Boden abgehobene Nichtgebrauchsstellung und zurück gleichzeitig mit der Lenkbewegung der gelenkten Stützräder (3) erfolgt.

7. Heuwerbungsmaschine nach einem der Ansprüche 1 bis 6, **dadurch gekennzeichnet, dass** die Überführung der Stützräder aus einer sich auf dem Boden abstützenden Gebrauchsstellung in eine vom Boden abgehobene Nichtgebrauchsstellung und zurück gleichzeitig mit der Lenkbewegung der gelenkten Stützräder (3) angetrieben von einem Stellglied pro Seitenteil (8, 9) erfolgt.

8. Heuwerbungsmaschine nach einem der Ansprüche 1 bis 7, **dadurch gekennzeichnet, dass** die Überführung der Stützräder aus einer sich auf dem Boden abstützenden Gebrauchsstellung in eine vom Boden abgehobene Nichtgebrauchsstellung und zurück durch mindestens ein separates Stellglied unabhängig von anderen Maschinenfunktionen erfolgt.

9. Heuwerbungsmaschine nach einem der Ansprüche 1 bis 8, **dadurch gekennzeichnet, dass** die bei der Transportfahrt sich auf dem Boden abstützenden, gelenkten Stützräder (3) bei Kurvenfahrt aktiv mitlenken.

10. Heuwerbungsmaschine nach einem der Ansprüche 1 bis 9, **dadurch gekennzeichnet, dass** die Betätigung der Überführung der Stützräder (3, 4) aus einer sich auf dem Boden abstützenden Gebrauchsstellung in eine vom Boden abgehobene Nichtgebrauchsstellung und zurück wahlweise so angesteuert werden kann, dass verschiedene Fahrwerksvarianten wählbar sind.

## Claims

1. Haymaking machine, especially for tedding and turning, having work rotors (5) arranged on a machine bar (2) and supported on the ground via support wheels (3, 4), wherein the machine bar (2), which has side units (8, 9) that pivot about essentially vertical pivot axes (12) into a transport position parallel to the direction of travel, is divided by horizontal pivot axes (6) into individual bars (7) having at least one work rotor (5) attached thereto and all work rotors (5) are distributed on the side units (8, 9), wherein each side unit (8, 9) has at least one steered support wheel (3), **characterized in that** at least one of the support wheels (3, 4) that is associated with a side unit (8, 9) and that is with or without the associated work rotor (5) may be moved out of a supporting usage position on the ground to a non-usage position raised from the ground, and back, these support wheels describing a nearly vertical upward movement that is so slight that the structural height of the haymaking machine changes only insignificantly.

2. Haymaking machine in accordance with claim 1, **characterized in that** each side unit (8, 9) is provided with two steered support wheels (3), and arranged in front of and behind each of the steered support wheels (3) is a support wheel (4) that, with the associated work rotor (5), may be moved out of a supporting usage position on the ground to a non-usage position raised from the ground, and back.

3. Haymaking machine in accordance with claim 1 or 2, **characterized in that** the support wheels (4) that may be moved out of a supporting usage position on the ground to a non-usage position raised from the ground, and back, are embodied as caster-steered support wheels.

4. Haymaking machine in accordance with any of claims 1 through 3, **characterized in that** each side unit (8, 9) is provided with more than two steered support wheels (3) and, except for two steered support wheels (3) disposed in the center area of the side units (8, 9), all other support wheels are embodied such that they may be moved out of a supporting usage position on the ground to a non-usage position raised from the ground, and back.

5. Haymaking machine in accordance with claim 1, **characterized in that** the approximately vertical upward movement by the support wheels (3, 4) when the support wheels (3, 4) move from a supporting usage position on the ground to a non-usage position raised from the ground and back is at least 30 mm.

6. Haymaking machine in accordance with any of claim 1 through 5, **characterized in that** the movement of the support wheels (3, 4) out of a supporting usage position on the ground to a non-usage position raised from the ground and back takes place simultaneously with the steering movement by the steered support wheels (3).

7. Haymaking machine in accordance with any of claims 1 through 6, **characterized in that** the movement by the support wheels out of a supporting usage position on the ground to a non-usage position raised from the ground and back takes place simultaneously with the steering movement of the steered support wheels (3) driven by one actuator per side unit (8, 9).

8. Haymaking machine in accordance with any of claims 1 through 7, **characterized in that** the movement by the support wheels out of a supporting usage position on the ground to a non-usage position raised from the ground and back takes place using at least one separate actuator independent of other machine functions.

9. Haymaking machine in accordance with any of claims 1 through 8, **characterized in that** the wheels (3) that support and are steered during travel actively co-steer when traveling curves.

10. Haymaking machine in accordance with any of claims 1 through 9, **characterized in that** the actuation of the movement of the support wheels (3, 4) out of a supporting usage position on the ground to a non-usage position raised from the ground and back may be selectively controlled such that different undercarriage variants may be selected.

## Revendications

1. Machine de fenaison en particulier pour permettre d'épandre et de retourner le foin, comportant des toupies de travail (5) montées sur une poutre (2) de la machine et s'appuyant sur le sol par des roues d'appui (3, 4), cette poutre comportant des parties latérales (8, 9) susceptibles de pivoter parallèlement à la direction de déplacement, autour d'axes de pivotement (12) essentiellement verticaux dans une position de transport et étant subdivisée par des axes de pivotement horizontaux (6) en poutres support individuelles (7) ayant au moins une toupie de travail (5) montée sur celles-ci et toutes les toupies de travail (5) étant réparties sur la partie latérale (8, 9), chaque partie latérale (8, 9) comportant au moins une roue support (3) directrice,
**caractérisée en ce qu'**
au moins l'une des roues d'appui (3, 4) associées à l'une des parties latérales (8, 9), peut être déplacée avec ou sans la toupie de travail (5) adjointe d'une position d'utilisation dans laquelle elle s'appuie sur le sol vers une position de repos dans laquelle elle est soulevée du sol, et inversement, ces roues d'appui décrivant une course de levage approximativement verticale qui est suffisamment petite pour que l'encombrement en hauteur de la machine de fenaison ne soit que peu modifié.

2. Machine de fenaison conforme à la revendication 1,
**caractérisée en ce que**
chaque partie latérale (8, 9) est équipée de deux roues d'appui directrices (3) et, en avant et en arrière des roues d'appui directrices (3) est respectivement montée une roue d'appui (4) pouvant être déplacée avec la toupie de travail adjointe (5) d'une position d'utilisation dans laquelle elle s'appuie sur le sol vers une position de repos dans laquelle elle est soulevée du sol et inversement.

3. Machine de fenaison conforme à la revendication 1 ou 2,
**caractérisée en ce que**
les roues d'appui (4) pouvant être déplacées d'une position d'utilisation dans laquelle elles s'appuient sur le sol vers une position de repos dans laquelle elles sont soulevées du sol et inversement, sont réalisées en tant que roues d'appui directrices entraînées par inertie.

4. Machine de fenaison conforme à l'une des revendications 1 à 3,
**caractérisée en ce que**
chaque partie latérale (8, 9) est équipée de plus de deux roues d'appui directrices (3) et, jusqu'à deux roues d'appui directrices (3) situées dans la zone médiane des parties latérales (8, 9), toutes les autres roues d'appui sont réalisées de façon à pouvoir être déplacées d'une position d'utilisation dans laquelle elles s'appuient sur le sol vers une position de repos dans laquelle elles sont soulevées du sol et inversement.

5. Machine de fenaison conforme à la revendication 1,
**caractérisée en ce que**
le mouvement de levage essentiellement vertical des roues d'appui (3, 4) lors de leur déplacement de la position d'utilisation dans laquelle elles s'appuient sur le sol vers la position de repos dans laquelle elles sont soulevées du sol, et inversement est d'au moins 30 mn.

6. Machine de fenaison conforme à l'une des revendications 1 à 5,
**caractérisée en ce que**
le déplacement des roues d'appui (3, 4) de la position d'utilisation dans laquelle elles s'appuient sur le sol vers la position de repos dans laquelle elles sont soulevées du sol et inversement est effectué simultanément au mouvement de direction des roues d'appui directrices (3).

7. Machine de fenaison conforme à l'une des revendications 1 à 6,
**caractérisée en ce que**
le déplacement des roues d'appui de la position d'utilisation dans laquelle elles s'appuient sur le sol vers la position de repos dans laquelle elles sont soulevées du sol et inversement s'effectue simultanément pour chaque partie latérale (8, 9) au mouvement de direction des roues d'appui directrices (3), en étant actionné par un organe de réglage.

8. Machine de fenaison conforme à l'une des revendications 1 à 7,
**caractérisée en ce que**
le déplacement des roues d'appui de la position d'utilisation dans laquelle elles s'appuient sur le sol vers la position de repos dans laquelle elles sont soulevées du sol et inversement s'effectue indépendamment des autres fonctions de la machine par l'intermédiaire d'au moins un organe de réglage séparé.

9. Machine de fenaison conforme à l'une des revendications 1 à 8,
**caractérisée en ce que**
les roues d'appui directrices (3) s'appuyant sur le sol pendant le déplacement de transport coopèrent activement lors d'un déplacement en courbe pour permettre un braquage.

10. Machine de fenaison conforme à l'une des revendications 1 à 9,
**caractérisée en ce que**
l'actionnement du déplacement des roues d'appui (3, 4) de la position d'utilisation dans laquelle elles s'appuient sur le sol vers la position de repos dans laquelle elles sont soulevées du sol et inversement peut être sélectivement commandé de sorte que différentes variantes d'outils puissent être choisies.
